# FASCICULE DE BREVET EUROPEEN

(11) **EP 2 173 019 B1**
(45) Date de publication et mention de la délivrance du brevet: **02.02.2011**
(21) Numéro de dépôt: 09171827.0
(22) Date de dépôt: 30.09.2009
(51) Int. Cl.: H02K 1/17

(54) **Stator de machine électrique tournante**
Stator einer elektrisch umlaufenden Maschine
Stator of an electric rotating machine

(30) Priorité: 01.10.2008 FR 0856632
(43) Date de publication de la demande: 07.04.2010
(73) Titulaire: Valeo Equipements Electriques Moteur, 94046 Créteil Cedex (FR)
(72) Inventeur: Metral, Jean-Sébastien, 38290, La Verpilliere (FR)
(74) Mandataire: de Lambilly Delorme, Marie Pierre

(56) Documents cités:
- EP-A- 0 706 254
- EP-A- 0 895 334
- EP-A- 1 237 252
- EP-A- 1 885 042
- FR-A- 2 808 937
- US-A- 5 942 873
- US-A1- 2003 094 863

## Description

La présente invention concerne un stator de machine électrique tournante, notamment à courant continu, cette machine étant notamment un démarreur de véhicule automobile.

Le brevet EP-B1-985 334 décrit un démarreur comportant un stator pourvu d'une pluralité de pôles magnétiques disposés sur une surface circonférentielle interne d'une culasse. Chaque pôle magnétique est formé par un aimant permanent en ferrite aimanté de manière à ce que les pôles Nord et Sud apparaissent radialement. Des aimants auxiliaires peuvent être prévus entre les aimants précités. Ces aimants auxiliaires sont en ferrite et aimantés de manière à ce que les pôles Nord et Sud apparaissent circonférentiellement. Un espace est prévu entre chaque aimant auxiliaire et la culasse. Une telle disposition peut permettre de réduire les fuites magnétiques.

Dans certaines configurations d'inducteur de démarreur, il peut être nécessaire d'assembler des aimants jointifs dans une culasse, laquelle peut être roulée ou non (comme décrit dans le document US 2003/0094863).

Notamment lorsque la culasse est roulée, celle-ci peut présenter un diamètre variable. Les aimants doivent être plaqués sur la culasse même si le diamètre présente des écarts.

La présente invention vise notamment à permettre un assemblage précis et fiable des aimants dans la culasse.

L'invention a pour objet un stator de machine électrique tournante, notamment à courant continu, cette machine étant notamment un démarreur de véhicule automobile, le stator comportant :
- une culasse comprenant une paroi sensiblement cylindrique présentant un axe longitudinal,
- au moins un aimant disposé à l'intérieur de la culasse, et comprenant au moins un bord latéral formant avec l'axe longitudinal de la paroi sensiblement cylindrique de la culasse, un angle strictement compris entre 0° et 90° caractérisé par le fait qu'il comporte une pluralité d'aimants permanents, notamment de forme trapézoïdale, disposés en quinconce, notamment de manière jointive.

Grâce à l'invention, ce bord latéral de l'aimant qui est incliné par rapport à l'axe longitudinal de la culasse permet, en ajustant la position axiale du ou des aimants du stator, de faire varier le diamètre circonscrit aux aimants et donc de garantir une adaptation à différents diamètres de la culasse, un plaquage satisfaisant des aimants contre la culasse et un blocage radial de ceux-ci.

De préférence, ce bord latéral s'étend sensiblement sur toute la hauteur de l'aimant, mesurée suivant l'axe longitudinal de la culasse.

Avantageusement ce bord latéral est sensiblement rectiligne.

Dans un exemple de mise en oeuvre de l'invention, l'angle entre ledit bord latéral de l'aimant et l'axe longitudinal de la culasse est compris entre 1° et 20°, étant notamment compris entre 2° et 15°, étant par exemple inférieur à 5°.

Cet angle peut être de préférence inférieur à 45°.

Si on le souhaite, ledit bord latéral de l'aimant permanent est en appui sur un bord latéral appartenant à l'un d'un aimant permanent voisin et un insert amagnétique voisin.

De préférence, l'aimant permanent présente une forme sensiblement trapézoïdale lorsque celui-ci est observé suivant un axe perpendiculaire à l'axe longitudinal de la culasse.

Dans un exemple de mise en oeuvre de l'invention, le stator comporte une pluralité d'aimants permanents, notamment de forme trapézoïdale, disposés en quinconce, notamment de manière jointive.

Le cas échéant, deux aimants permanents voisins présentent des bords d'extrémité axiale décalés axialement d'une distance correspondant à une fraction de la hauteur des aimants permanents, cette distance étant notamment inférieure à 1/5 de la hauteur de l'aimant.

Ce décalage axial entre aimants voisins est notamment dépendant de l'angle au sommet de la forme trapézoïdale des aimants.

Dans un exemple de mise en oeuvre de l'invention, le stator comporte au moins un élément de fixation des aimants contre une surface intérieure de la paroi cylindrique de la culasse, cet élément de fixation comprenant au moins une patte de maintien, notamment du type découpée dans une tôle.

Par exemple l'élément de maintien peut comporter au moins une couronne, fendue ou non, s'étendant sur au moins une majeure partie d'une circonférence des aimants permanents.

En variante, le blocage en rotation et/ou en translation des aimants peut être réalisés par des bossages formés sur la culasse.

L'invention a encore pour objet une machine électrique tournante, notamment un démarreur de véhicule automobile, comportant un stator tel que défini ci-dessus

La machine électrique selon l'invention peut être agencée pour opérer à une puissance maximale comprise entre 500 W et 2000 W par exemple.

L'invention pourra être mieux comprise à la lecture de la description détaillée qui va suivre, d'exemples de mise en oeuvre non limitatifs de l'invention, et à l'examen du dessin annexé, sur lequel :
- la figure 1 représente, schématiquement et partiellement, un démarreur de véhicule automobile conforme à un exemple de mise en oeuvre de l'invention,
- les figures 2 à 6 représentent, schématiquement et partiellement, suivant différentes vues, un stator selon un exemple de mise en oeuvre de l'invention, équipant le démarreur selon la figure 1,
- les figures 7 et 8 représentent, schématiquement et partiellement, suivant différentes vues, un autre exemple de stator selon l'invention, et
- les figures 9 à 11, respectivement 12 à 14 et 15 à 17, représentent, schématiquement et partiellement, suivant différentes vues, trois autres exemples encore de stator selon l'invention.

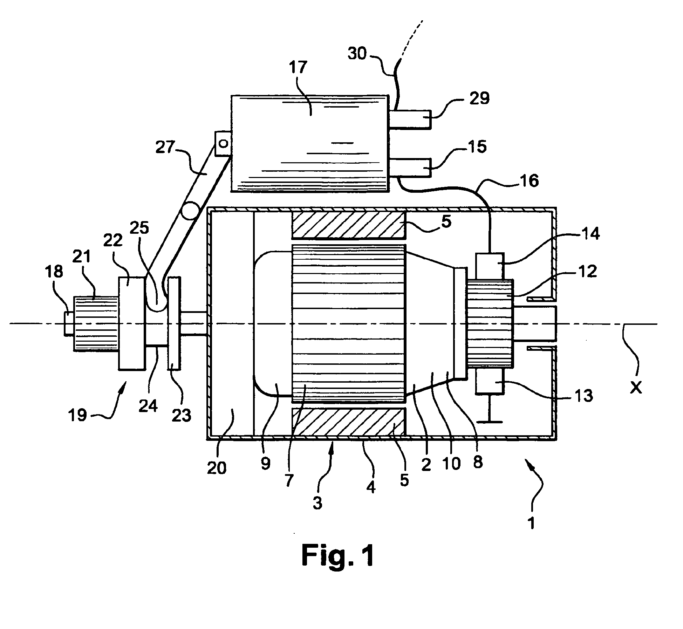

On a représenté très schématiquement sur la figure 1 un démarreur 1 pour moteur à combustion de véhicule automobile.

Ce démarreur 1 à courant continu comprend, d'une part, un rotor 2, encore appelé induit, pouvant tourner autour d'un axe longitudinal X, et d'autre part, un stator 3, encore appelé inducteur.

Ce stator 3 comporte une culasse 4 portant une structure aimantée 5 à aimantation permanente.

Le rotor 2 comporte un corps de rotor 7 et un bobinage 8 enroulé dans des encoches du corps de rotor 7.

Le bobinage 8 forme, de part et d'autre du corps de rotor 7, un chignon avant 9 et un chignon arrière 10.

Le rotor 2 est pourvu, à l'arrière, d'un collecteur 12 comprenant une pluralité de pièces de contact connectées électriquement aux éléments conducteurs, formés dans l'exemple considéré par des fils, du bobinage 8.

Un groupe de balais 13 et 14 est prévu pour l'alimentation électrique du bobinage 8, l'un des balais 13 étant relié à la masse du démarreur 1 et un autre des balais 14 étant relié à une borne électrique 15 d'un contacteur 17 via un fil 16. Les balais sont par exemple au nombre de quatre.

Les balais 13 et 14 viennent frotter sur le collecteur 12 lorsque le rotor 2 est en rotation, permettant l'alimentation du rotor 2 par commutation du courant électrique dans des sections du rotor 2.

Le démarreur 1 comporte en outre un ensemble lanceur 19 monté de manière coulissante sur un arbre d'entraînement 18 et pouvant être entraîné en rotation autour de l'axe X par le rotor 2.

Un ensemble réducteur de vitesses 20 est interposé entre le rotor 2 et l'arbre d'entraînement 18, de manière connue en soi.

En variante, le démarreur 1 peut être du type 'Direct Drive', dépourvu de réducteur de vitesses.

L'ensemble lanceur 19 comporte un élément d'entraînement formé par un pignon 21 et destiné à s'engager sur un organe d'entraînement du moteur à combustion, non représenté. Cet organe d'entraînement est par exemple une couronne dentée.

L'ensemble lanceur 19 comprend en outre une roue libre 22 et une rondelle poulie 23 définissant entre elles une gorge 24 pour recevoir l'extrémité 25 d'une fourchette 27.

Cette fourchette 27 est réalisée par exemple par moulage d'une matière plastique.

La fourchette 27 est actionnée par le contacteur 17 pour déplacer l'ensemble lanceur 19 par rapport à l'arbre d'entraînement 18, suivant l'axe X, entre une première position dans laquelle l'ensemble lanceur 19 entraîne le moteur à combustion par l'intermédiaire du pignon 21, et une deuxième position dans laquelle l'ensemble lanceur 19 est désengagé du moteur à combustion.

Le contacteur 17 comprend, outre la borne 15 reliée au balai 14, une borne 29 reliée via un élément de liaison électrique, notamment un fil 30, à une alimentation électrique du véhicule, notamment une batterie.

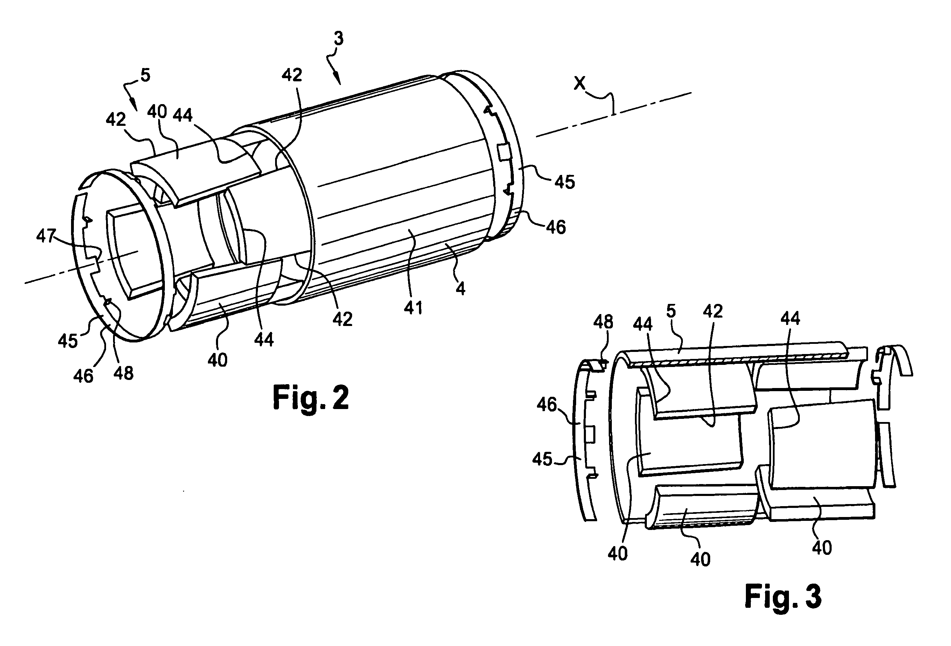

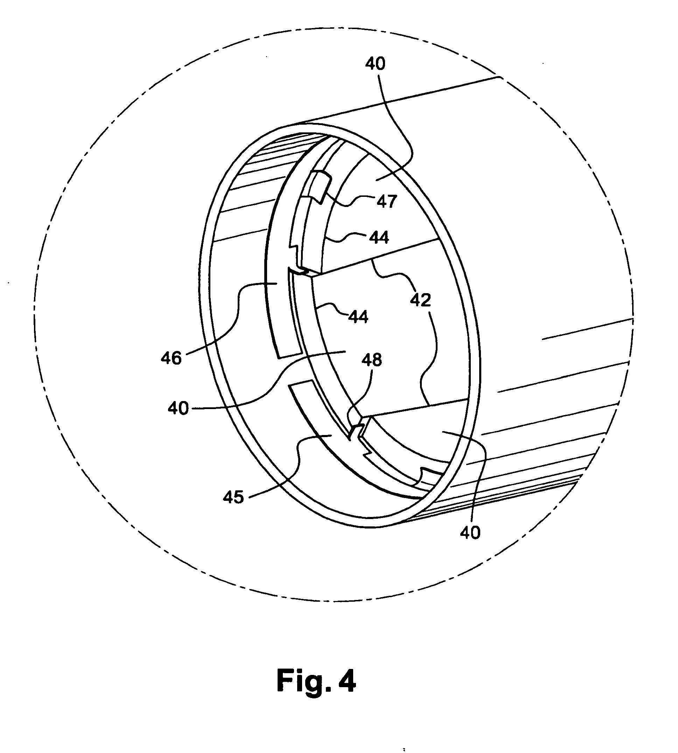

On a représenté sur les figures 2 à 6 le stator 3 avec la structure aimantée 5, laquelle comprend six aimants permanents 40 par exemple en ferrite.

La culasse 4 comprend une paroi sensiblement cylindrique de révolution 41 d'axe X réalisée, dans l'exemple décrit, par roulage.

Les aimants 40 présentent chacun une forme sensiblement trapézoïdale lorsque ceux-ci sont observés suivant un axe perpendiculaire à l'axe longitudinal X de la culasse 4.

Chaque aimant 40 présente deux faces principales en forme de portions de cylindre coaxiales.

Chaque aimant 40 présente deux bords latéraux rectilignes 42 faisant un angle *alpha* non nul avec l'axe longitudinal X.

Les aimants 40 sont disposés en quinconce, de manière jointive.

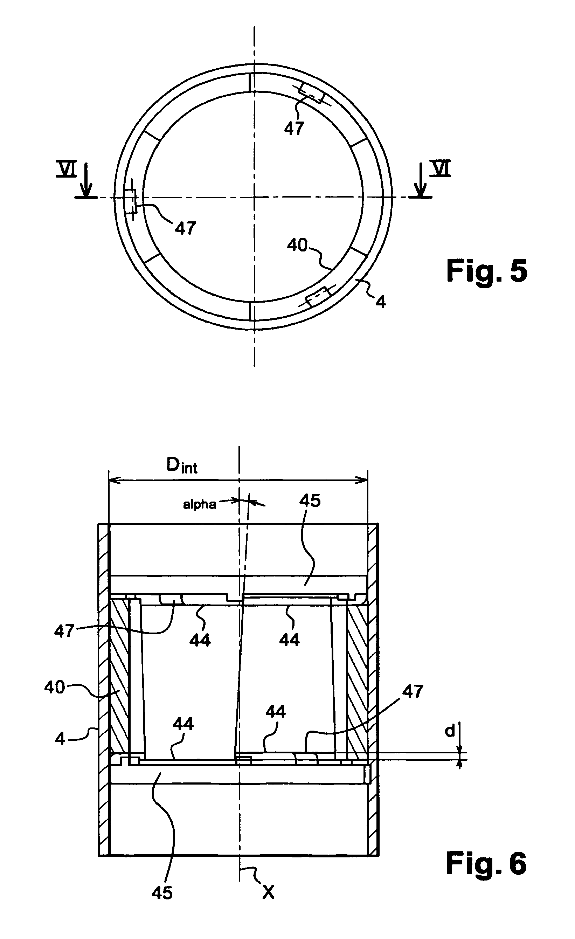

Comme illustré sur la figure 6, cet angle *alpha* est par exemple sensiblement égal à 3° de sorte que des bords d'extrémité axiale 44 des aimants 40 soient décalés axialement d'une distance d d'environ 2 mm, pour un diamètre intérieur Dint de la culasse 4 d'environ de 66 mm.

Dans l'exemple décrit, les aimants 40 sont de mêmes dimensions.

Ces aimants 40 sont plaqués contre la surface intérieure de la culasse 4 à l'aide de deux éléments de fixation 45 disposés de part et d'autre des aimants 40.

Chaque élément de fixation 45 comporte une couronne fendue 45 pourvue d'une pluralité de pattes de maintien 47 agencées chacune pour s'appliquer contre le plus grand des deux bords d'extrémité axiale 44 de chacun des aimants 40.

La couronne 46 et les pattes 47 sont formées par découpe et pliage d'une tôle métallique.

En variante, cette couronne 46 et les pattes 47 peuvent être réalisées en matière plastique.

La couronne 46 est en outre pourvue de languettes 48 pour empêcher la rotation des aimants 40, chacune de ces languettes 48 étant en appui contre un bord latéral rectiligne 42 de l'un des aimants 40.

La couronne 46 est fixée sur la culasse 4 par rivetage, boutonnage, vissage ou collage par exemple.

Dans l'exemple de mise en oeuvre qui vient d'être décrit, les aimants 40 présentent tous les mêmes dimensions.

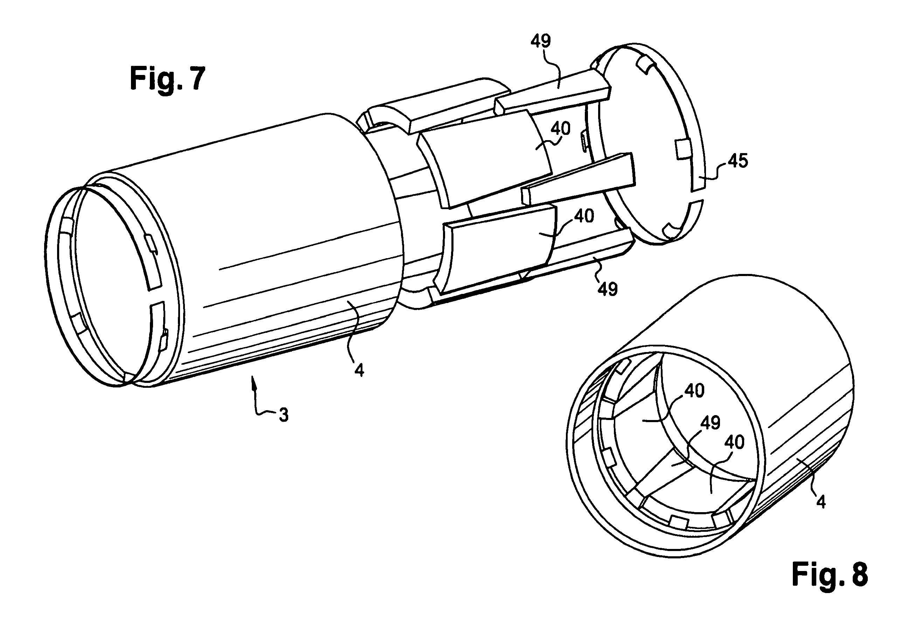

On ne sort pas du cadre de la présente invention lorsque le stator 3 comporte des aimants de deux types différents, comme illustré sur les figures 7 et 8.

Dans cet exemple de mise en oeuvre de l'invention, des aimants 40 de grandes dimensions sont disposés de manière alternée avec des aimants 49 de plus petites dimensions.

Les aimants 40 et 49 disposés en quinconce présentent des formes trapézoïdales.

L'aimantation au sein des aimants 40 et 49 peut définir par exemple six pôles magnétiques.

En variante, le nombre de pôles peut être égal à quatre.

La direction d'aimantation peut, le cas échéant, varier, notamment continûment, lorsque l'on se déplace sur une circonférence des aimants 40 et 49.

Dans les exemples qui sont décrits ci-dessus, tous les aimants du stator présentent la même épaisseur mesurée dans une direction radiale.

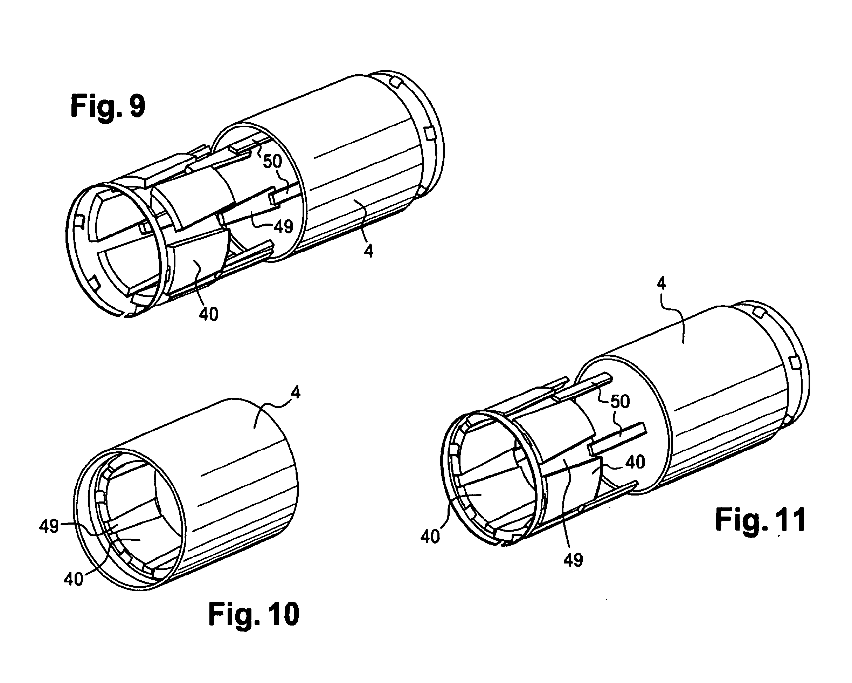

En variante, comme illustré sur les figures 9 à 11, les aimants 49 de plus petites dimensions présentent une épaisseur radiale plus faible que celle des aimants 40 voisins.

Ces aimants 49 de plus faibles dimensions sont plaqués contre des inserts 50 réalisés en matière plastique.

Chaque insert 50 présente une forme sensiblement rectangulaire.

Dans l'exemple de mise en oeuvre des figures 9 à 11, les inserts 50 sont formés chacun d'une pièce individuelle.

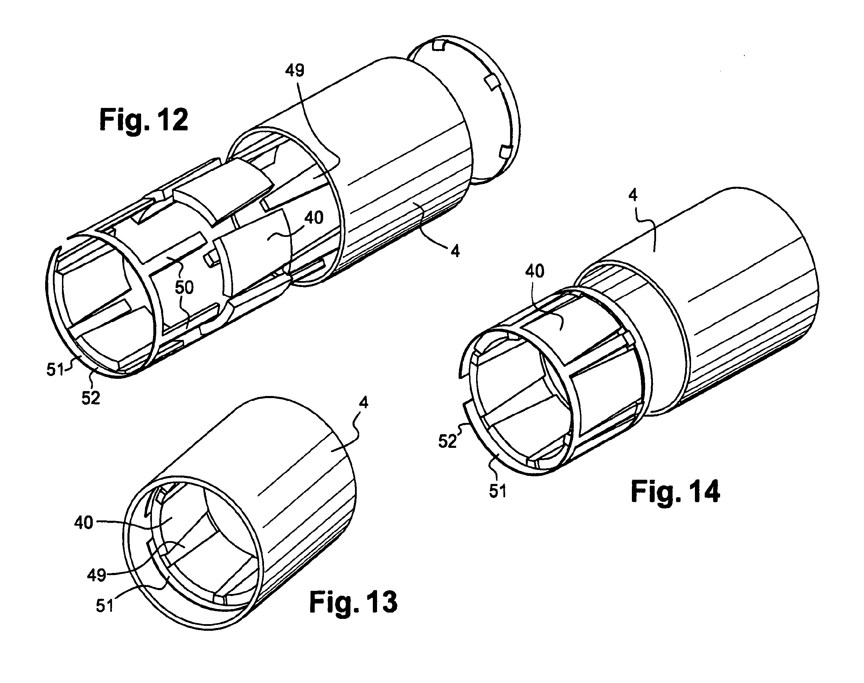

En variante, comme illustré sur les figures 12 à 14, les inserts 50 sont formés sur une pièce commune 51 comportant une couronne fendue 52 sur laquelle se raccordent les inserts 50.

Dans les exemples décrits ci-dessus, les aimants forment une structure aimantée continue sur toute sa circonférence.

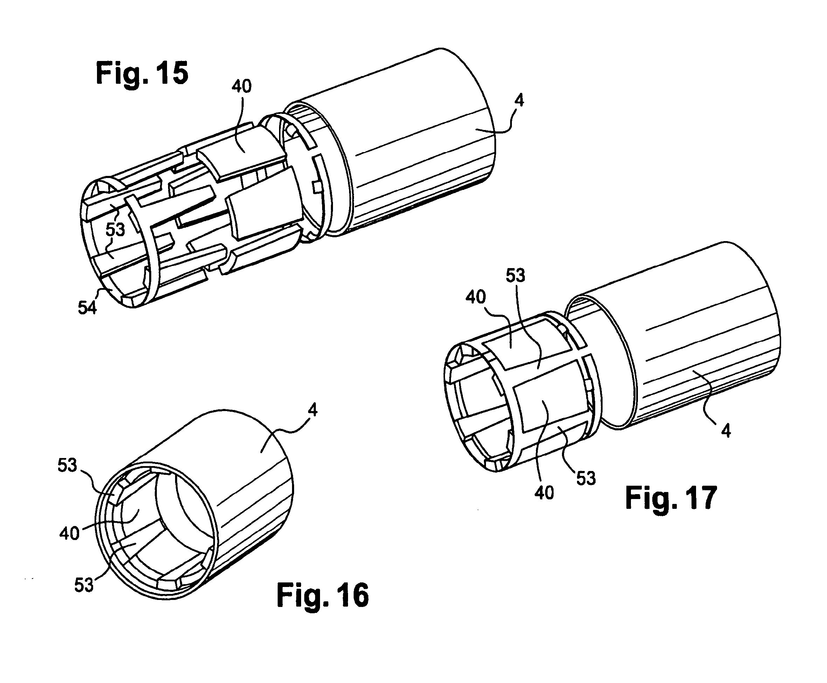

En variante, comme illustré sur les figures 15 à 17, les aimants 40 de forme trapézoïdale sont séparés deux à deux par un insert amagnétique 53, par exemple en matière plastique, de forme trapézoïdale complémentaire de la forme des aimants 40.

Ces inserts 53 se raccordent à une couronne fendue 54.

## Revendications

1. Stator (3) de machine électrique tournante, notamment à courant continu, cette machine étant notamment un démarreur (1) de véhicule automobile, le stator comportant :
- une culasse (4) comprenant une paroi (41) sensiblement cylindrique présentant un axe longitudinal (X),
- au moins un aimant (40) disposé à l'intérieur de la culasse, et comprenant au moins un bord latéral (42) formant avec l'axe longitudinal (X) de la paroi sensiblement cylindrique de la culasse, un angle (alpha) strictement compris entre 0° et 90°,
**caractérisé par le fait qu'**il comporte une pluralité d'aimants permanents (40), notamment de forme trapézoïdale, disposés en quinconce, notamment de manière jointive.

2. Stator selon la revendication précédente, **caractérisé par le fait que** ledit bord latéral (52) est sensiblement rectiligne.

3. Stator selon l'une quelconque des revendications précédentes, **caractérisé par le fait que** l'angle entre ledit bord latéral (42) de l'aimant et l'axe longitudinal (X) de la culasse est compris entre 1° et 20", étant notamment compris entre 2° et 15°, étant par exemple inférieur à 5°_{.}

4. Stator selon l'une quelconque des revendications précédentes, **caractérisé par le fait que** ledit bord latéral (42) de l'aimant permanent (40) est en appui sur un bord latéral appartenant à l'un des aimant permanent voisin et un insert amagnétique (53).

5. Stator selon l'une quelconque des revendications précédentes, **caractérisé par le fait que** l'aimant permanent (40) présente une forme sensiblement trapézoïdale lorsque celui-ci est observé suivant un axe perpendiculaire à l'axe longitudinal de la culasse.

6. Stator selon la revendication précédente, **caractérisé par le fait que** deux aimants permanents (40) voisins présentent des bords d'extrémité axiale (44) décalés axialement d'une distance correspondant à une fraction de la hauteur des aimants permanents, cette distance étant notamment inférieure à 1/5 de la hauteur de l'aimant.

7. Stator selon l'une quelconque des revendications précédentes, **caractérisé par le fait qu'**il comporte au moins un élément de fixation (45) des aimants contre une surface intérieure de la paroi cylindrique (41) de la culasse, cet élément de fixation comprenant au moins une patte de maintien (47), notamment du type découpée dans une tôle.

8. Stator selon la revendication précédente, **caractérisé par le fait que** l'élément de maintien comporte au moins une couronne (46) s'étendant sur au moins une majeure partie d'une circonférence des aimants permanents.

9. Machine électrique tournante, notamment démarreur de véhicule automobile, comportant un stator (3) tel que défini dans l'une quelconque des revendications précédentes.

## Claims

1. Stator (3) of a rotary electrical machine, in particular with direct current, this machine being in particular a starter (1) of a motor vehicle, the stator comprising:
- a head (4) comprising a substantially cylindrical wall (41) with a longitudinal axis (X);
- at least one magnet (40) which is disposed in the interior of the head, and comprises at least one lateral edge (42) which forms together with the longitudinal axis (X) of the substantially cylindrical wall of the head an angle (*alpha*) which is strictly contained between 0° and 90°,
**characterised in that** it comprises a plurality of permanent magnets (40), which in particular have a trapezoidal form, arranged staggered, and in particular in a contiguous manner.

2. Stator according to the preceding claim, **characterised in that** the said lateral edge (52) is substantially straight.

3. Stator according to either of the preceding claims, **characterised in that** the angle between the said lateral edge (42) of the magnet and the longitudinal axis (X) of the head is between 1° and 20°, and in particular is between 2° and 15°, and for example is less than 5°.

4. Stator according to any one of the preceding claims, **characterised in that** the said lateral edge (42) of the permanent magnet (40) is supported on a lateral edge which belongs to one out of an adjacent permanent magnet and a non-magnetic insert (53).

5. Stator according to any one of the preceding claims, **characterised in that** the permanent magnet (40) has a substantially trapezoidal form when it is observed according to an axis perpendicular to the longitudinal axis of the head.

6. Stator according to the preceding claim, **characterised in that** two adjacent permanent magnets (40) have axial end edges (44) which are offset axially by a distance corresponding to a fraction of the height of the permanent magnets, this distance being in particular less than 1/5 of the height of the magnet.

7. Stator according to any one of the preceding claims, **characterised in that** it comprises at least one element (45) for securing of the magnets against an inner surface of the cylindrical wall (41) of the head, this securing element comprising at least one retention lug (47), in particular of the type which is cut from a metal plate.

8. Stator according to the preceding claim, **characterised in that** the retention element comprises at least one ring (46) which extends on at least most of a circumference of the permanent magnets.

9. Rotary electrical machine, in particular a starter of a motor vehicle, comprising a stator (3) as defined in any one of the preceding claims.

## Patentansprüche

1. Stator (3) einer rotierenden elektrischen Maschine, insbesondere einer Gleichstrommaschine, bei der es sich insbesondere um einen Starter (1) eines Kraftfahrzeugs handelt, wobei der Stator umfasst
- ein Joch (4) mit einer Wand (41), die in etwa zylindrisch ist und eine Längsachse (X) aufweist,
- mindestens einen Magneten (40), der in dem Joch angeordnet ist und mindestens einen Seitenrand (42) umfasst, der mit der Längsachse (X) der in etwa zylindrischen Wand des Jochs einen Winkel (*alpha*) bildet, der genau zwischen 0° und 90° liegt,
**dadurch gekennzeichnet, dass** er eine Mehrzahl an insbesondere trapezförmigen Permanentmagneten (40) umfasst, die versetzt, insbesondere aneinander stoßend, angeordnet sind.

2. Stator nach dem vorhergehenden Anspruch, **dadurch gekennzeichnet, dass** der besagte Seitenrand (52) in etwa geradlinig ist.

3. Stator nach einem der vorhergehenden Ansprüche, **dadurch gekenntzeichnet, dass** der Winkel zwischen dem besagten Seitenrand (42) des Magneten und der Längsachse (X) des Jochs zwischen 1° und 20° liegt, insbesondere zwischen 2° und 15°, wobei er zum Beispiel kleiner ist als 5°.

4. Stator nach einem der vorhergehenden Ansprüche, **dadurch gekennzeichnet, dass** der besagte Seitenrand (42) des Permanentmagneten (40) auf einen Seitenrand, der zu einem der benachbarten Permanentmagneten gehört, und einen amagnetischen Einsatz (53) ist.

5. Stator nach einem der vorhergehenden Ansprüche, **dadurch gekennzeichnet, dass** der Permanentmagnet (40) in etwa trapezförmig ist, wenn er entlang einer Achse betrachtet wird, die senkrecht zur des Jochs verläuft.

6. Stator nach dem vorhergehenden Anspruch, **dadurch gekennzeichnet, dass** zwei benachbarte Permanentmagnete (40) axiale Endränder (44) aufweisen, die axial um einen Abstand versetzt sind, der einem Bruchteil der Höhe der Permanentmagnete entspricht, wobei dieser Abstand insbesondere kleiner ist, als 1/5 der Höhe des Magneten.

7. Stator nach einem der vorhergehenden Ansprüche, **dadurch gekenntzeichnet, dass** er mindestens ein Element (45) zum Befestigen der Magnete gegen eine Innenfläche der zylindrischen Wand (41) des Jochs umfasst, wobei dieses Befestigungselement mindestens eine Klaue (47) umfasst, insbesondere der Art, die aus einem Blech ausgeschnitten ist.

8. Stator nach dem vorhergehenden Anspruch, **dadurch gekennzeichnet, dass** das Halteelement mindestens einen Kranz (46) umfasst, der sich mindestens über einen größeren Teil eines Umfangs der Permanentmagnete erstreckt.

9. Rotierende elektrische Maschine, insbesondere Starter eines Kraftfahrzeugs, die einen Stator (3) umfasst, wie ihn einem der vorhergehenden Ansprüche beschrieben.
